# EUROPÄISCHE PATENTSCHRIFT

(11) **EP 3 530 159 B1**
(45) Veröffentlichungstag und Bekanntmachung des Hinweises auf die Patenterteilung: **29.07.2020**
(21) Anmeldenummer: 18157752.9
(22) Anmeldetag: 21.02.2018
(51) Int. Cl.: A47J 43/07

(54) **SPEISENZUBEREITUNGSVORRICHTUNG MIT LÖSBAREM WERKZEUG**
FOOD PREPARATION DEVICE WITH RELEASABLE TOOL
DISPOSITIF DE PRÉPARATION D'ALIMENTS À OUTIL AMOVIBLE

(43) Veröffentlichungstag der Anmeldung: 28.08.2019
(73) Patentinhaber: Vorwerk & Co. Interholding GmbH, 42270 Wuppertal (DE)
(72) Erfinder: Charopoulos, Philipp, 40223 Düsseldorf (DE); van Teeffelen, Niklas, 42549 Velbert (DE)
(74) Vertreter: Gille Hrabal

(56) Entgegenhaltungen:
- WO-A1-2013/049881
- CH-A- 370 537
- US-A1- 2002 176 320

## Beschreibung

Die Erfindung betrifft eine Speisenzubereitungsvorrichtung mit einem Speisenzubereitungsgefäß und einem drehbaren Werkzeug zum Zerkleinern und/oder Mischen einer Speise in dem Speisenzubereitungsgefäß. Das Werkzeug kann zum Drehen lösbar mit einer Welle verbunden werden, die zumindest teilweise außerhalb des Speisenzubereitungsgefäßes liegt, um mit einem Antrieb zum Drehen gekoppelt zu werden. Ein Verriegelungsmechanismus für ein verriegeltes Verbinden des Werkzeugs mit der Welle ist vorgesehen. Die Dokumente US 2002/176320 und CH 370 537 offenbaren derartige Speisezubereitungsvorrichtungen.

Es gibt Speisenzubereitungsvorrichtungen wie Küchenmaschinen, bei denen eine Werkzeuganordnung mit einem drehbaren Messerpaket durch eine Öffnung im Topfboden gesteckt und anschließend verriegelt wird, so dass die Öffnung verschlossen wird. Das Messerpaket ist dabei nicht für ein Entfernen von der Werkzeuganordnung durch den Benutzer vorgesehen. Nach dem Zubereiten einer Speise wird die Speise daher um das Messerpaket herum entnommen. Zum Reinigen kann die Werkzeuganordnung vom Topf gelöst und entfernt werden. Flüssige Speisereste können dann durch die Öffnung austreten.

Bei der Küchenmaschine Prep & Cook der Fa. Krups kann ein Messer über eine spiralförmige Führung auf einen Antriebszapfen geschoben werden, um das Messer durch den Antriebszapfen für ein Drehen anzutreiben. Durch diese Führung ist das Messer jedoch nur in eine Drehrichtung radial und axial gesichert. Ein Drehen in die nicht vorgesehene Richtung würde zum Lösen des Messers führen. Es gibt daher nur eine Drehrichtung.

Es ist Aufgabe der Erfindung, eine weiterentwickelte Speisenzubereitungsvorrichtung und eine weiterentwickelte Werkzeuganordnung bereitzustellen.

Zur Lösung der Aufgabe dienen eine Speisenzubereitungsvorrichtung gemäß dem Hauptanspruch sowie eine Werkzeuganordnung gemäß dem Nebenanspruch. Vorteilhafte Ausführungsformen ergeben sich aus den Unteransprüchen.

Zur Lösung der Aufgabe dient eine Speisenzubereitungsvorrichtung mit einem Speisenzubereitungsgefäß und einem drehbaren Werkzeug zum Zerkleinern und/oder Mischen einer Speise in dem Speisenzubereitungsgefäß. Das Werkzeug kann zum Drehen lösbar mit einer Welle verbunden werden, die zumindest teilweise außerhalb des Speisenzubereitungsgefäßes liegt, um mit einem Antrieb zum Drehen gekoppelt zu werden. Ein Verriegelungsmechanismus für ein verriegeltes Verbinden des Werkzeugs mit der Welle ist vorgesehen und so beschaffen, dass das Werkzeug durch die Welle im Betrieb in beide Drehrichtungen zum Zerkleinern und/oder Mischen einer Speise angetrieben werden kann. Im Betrieb, also insbesondere während der Speisenzubereitung, bleibt das Werkzeug mit der Welle auch bei sich umkehrender Drehrichtung stets zuverlässig verriegelt verbunden. Eine Speise kann somit unter Ausnutzung beider Werkzeug-Drehrichtung zubereitet werden, z.B. zum Anfertigen eines Teigs. Anschließend kann das Werkzeug durch den Benutzer entfernt und die Speise ohne Behinderung durch das Werkzeug entnommen werden.

Insbesondere umfasst die Speisenzubereitungsvorrichtung einen Antrieb, der im Wesentlichen aus einem Elektromotor und einem Getriebe bestehen kann. In einer Ausgestaltung ist der Elektromotor ein Reluktanzmotor. Der Betrieb in beide Drehrichtungen kann durch einen Reluktanzmotor besonders zuverlässig ermöglicht werden. Ein Reluktanzmotor umfasst allgemein eine feststehende Wicklung als Stator und ein rotierendes Eisen mit radialen Vorsprüngen als Rotor. Im Betrieb kann die Drehrichtung während des Zubereitungsvorgangs insbesondere auf Knopfdruck umgekehrt werden. Die Welle kann vorzugsweise durch den Benutzer lösbar an den Antrieb angekoppelt werden, so dass der Motor die Welle und die Welle das Werkzeug dreht. Eine Welle ist grundsätzlich ein zylindrischer Drehkörper. Eine Welle hat eine Drehachse. Vorzugsweise haben die Welle und das Werkzeug dieselbe Drehachse. Eine Welle kann einen oder mehrere Wellenabsätze zum Beispiel für einen Kugellagersitz oder als Abschirmung aufweisen. Eine Welle, die zumindest teilweise außerhalb des Speisenzubereitungsgefäßes liegt, erstreckt sich bevorzugt durch eine Gefäßdurchführung von außen ins Innere oder in Richtung des Inneren des Speisenzubereitungsgefäßes. Bevorzugt ist ein Dichtelement zwischen der Gefäßdurchführung und der Welle vorgesehen, damit keine Flüssigkeit aus dem Inneren des Speisenzubereitungsgefäßes durch die Gefäßdurchführung nach außen gelangt.

Bevorzugt ist das Werkzeug um eine Drehachse drehbar. Insbesondere können besonders hohe Drehzahlen des Werkzeugs von mindestens 5.000 U/min, vorzugsweise beispielsweise 10.000 U/min, erreicht werden. Bevorzugt weist das Werkzeug einen oder mehrere radiale Werkzeugarme auf, z.B. Rührarme zum Mischen, Klingen zum Zerkleinern oder Messer bzw. Mixmesser zum Mischen und Zerkleinern. Insbesondere ist der mindestens eine Werkzeugarm fest an einer Halterung des Werkzeugs angebracht. Bevorzugt kann die Welle zum verriegelten Verbinden mit dem Werkzeug direkt mit der Halterung oder einem Ankopplungszapfen des Werkzeugs verriegelt verbunden werden. Der Ankopplungszapfen kann einstückig mit der Halterung ausgeformt oder drehfest damit verbunden sein, insbesondere derart, dass die Verbindung nicht für ein Lösen durch den Benutzer bestimmt oder eingerichtet ist.

Die Speisenzubereitungsvorrichtung ist bevorzugt ein Speisenzubereitungsgerät wie z.B. eine elektrische Küchenmaschine vorzugsweise mit einem Heizelement zum Erhitzen der Speise in dem Speisenzubereitungsgefäß. Die Speisenzubereitungsvorrichtung kann grundsätzlich auch ein Ofen oder ein Kochautomat sein. Im Betrieb werden eine Speise und/oder eine Zutat in das Speisenzubereitungsgefäß gegeben und die Speise in dem Speisenzubereitungsgefäß zubereitet. Zubereiten einer Speise bedeutet ein Verarbeiten durch Mischen, Zerkleinern und/oder Erhitzen. Eine Speise kann fest oder flüssig sein.

In einer Ausführungsform umfasst das Speisenzubereitungsgefäß eine Gefäßdurchführung zum Verbinden des Werkzeugs mit einem Antrieb, insbesondere in einem Gefäßboden des Speisenzubereitungsgefäßes. Das Werkzeug kann auf diese Weise im Betrieb besonders nahe am Antrieb angeordnet sein und mit besonders hohen Drehzahlen gedreht werden. Insbesondere liegt die Gefäßdurchführung fern von oder gegenüberliegend zu einer Öffnung des Speisenzubereitungsgefäßes, die zum Zuführen von Zutaten und Entnehmen der Speise dient. Die Öffnung ist normalerweise an der Oberseite des Speisenzubereitungsgefäßes angeordnet und kann optional durch einen Deckel abgedeckt werden. Die Gefäßdurchführung erstreckt sich hingegen insbesondere durch den Gefäßboden, vorzugsweise in der Mitte des Gefäßbodens. Ein besonders gleichmäßiges Mischen und/oder Zerkleinern einer Speise durch das Werkzeug können so ermöglicht werden.

In einer Ausführungsform ist vorgesehen, dass die Welle zum Abdichten der Gefäßdurchführung mit dem Speisenzubereitungsgefäß verbunden bleiben kann, wenn das Werkzeug von der Welle gelöst und entfernt ist. Das Lösen des Werkzeugs von der Welle bezieht sich auf das Lösen der verriegelten Verbindung zwischen dem Werkzeug und der Welle. Speisen wie z.B. Kartoffelbrei oder Eiscreme können so besonders leicht und vollständig entnommen und das Speisenzubereitungsgefäß mit besonders geringem Aufwand gereinigt werden. Das Werkzeug kann nach dem Lösen der verriegelten Verbindung angehoben und damit von der Welle entfernt werden. Nach dem Herausnehmen des Werkzeugs aus dem Speisenzubereitungsgefäß können Speisereste ungehindert am Gefäßboden beispielsweise durch einen Spachtel zusammengetragen und entnommen werden. Wenn das Werkzeug Messer umfasst, kann durch das Herausnehmen des Werkzeugs ein Beschädigen des Spachtels vermieden werden. Gleichzeitig wird der Zugang zum Gefäßboden nicht mehr durch radiale Werkzeugarme teilweise versperrt.

Insbesondere wird ein Oberteil mit dem Werkzeug von einem Unterteil mit der Welle gelöst und entnommen, so dass das Oberteil den Gefäßboden nicht mehr für eine Entnahme der zubereiteten Speise verdeckt und das Speisenzubereitungsgefäß bzw. die Gefäßdurchführung infolge des an Ort und Stelle verbleibenden Unterteils abgedichtet bleibt.

Eine Werkzeuganordnung, die einen eigenständigen Aspekt der Erfindung darstellt, und für eine eingangs beschriebene Speisenzubereitungsvorrichtung vorgesehen ist, besteht im Wesentlichen aus einem Oberteil und einem Unterteil. Das Oberteil weist ein drehbares Werkzeug zum Zerkleinern und/oder Mischen einer Speise in einem Speisenzubereitungsgefäß auf. Das Unterteil umfasst eine Welle zum Drehen des Werkzeugs, die zumindest teilweise außerhalb des Speisenzubereitungsgefäßes liegen kann, um mit einem Antrieb zum Drehen gekoppelt zu werden. Das Werkzeug kann zum Drehen lösbar mit der Welle verbunden werden. Ein Verriegelungsmechanismus für ein verriegeltes Verbinden des Werkzeugs mit der Welle ist vorgesehen und so beschaffen, dass das Werkzeug durch die Welle im Betrieb in beide Drehrichtungen zum Zerkleinern und/oder Mischen einer Speise angetrieben werden kann. Die nachfolgenden Ausführungsformen beziehen sich nicht nur auf die Speisenzubereitungsvorrichtung zur Lösung der eingangs gestellten Aufgabe, sondern können sich auch auf diese Werkzeuganordnung beziehen.

In einer Ausführungsform umfasst ein Unterteil die Welle. Die Gefäßdurchführung kann so besonders zuverlässig auch bei hohen Drehzahlen abgedichtet werden. In einer alternativen oder ergänzenden Ausführungsform ist die Welle drehbar mit einem Unterteilgehäuse des Unterteils verbunden. Ein Unterteilgehäuse erlaubt zuverlässig eine drehbare Lagerung der Welle, bevorzugt durch ein Kugellager. Insbesondere ist die Welle drehbar und axial fixiert mit dem Unterteilgehäuse verbunden, insbesondere durch das besagte Kugellager. Durch die axiale Fixierung, z.B. mittels einer Presspassung, trägt die Welle stets zusammen mit dem Unterteilgehäuse zum Abdichten der Gefäßdurchführung bei, wenn das Unterteil in die Gefäßdurchführung eingesetzt oder dicht damit verbunden ist. Nach dem Zubereiten einer Speise und dem Lösen des Oberteils von dem eingesetzten Unterteil kann somit verhindert werden, dass der Benutzer die Welle aus dem Unterteil drückt oder anderweitig lösen kann, was eine Undichtigkeit des Speisenzubereitungsgefäßes zur Folge hätte.

In einer Ausführungsform umfasst ein Oberteil das Werkzeug. Das Werkzeug, das zum Beispiel im Wesentlichen aus radialen Werkzeugarmen und einem Halter für die radialen Werkzeugarme besteht, kann so besonders zuverlässig und vibrationsarm auch bei hohen Drehzahlen betrieben werden. Ferner kann das Werkzeug so über das Oberteil für den Benutzer besonders komfortabel mit der Welle verriegelt verbunden werden. In einer alternativen oder ergänzenden Ausführungsform ist das Werkzeug drehbar mit einem Oberteilgehäuse des Oberteils verbunden. Ein Oberteilgehäuse erlaubt zuverlässig eine drehbare Lagerung des Werkzeugs, bevorzugt durch ein Kugellager. Insbesondere ist das Werkzeug drehbar und axial fixiert mit dem Oberteilgehäuse verbunden, insbesondere durch das besagte Kugellager. Durch die axiale Fixierung, die allgemein nicht für ein Lösen durch den Benutzer bestimmt oder eingerichtet ist, kann eine besonders robuste verriegelte Verbindung des Werkezugs mit der Welle auch bei besonders hohen Drehzahlen erhalten werden. Das Oberteilgehäuse ist vorteilhaft in Bezug auf die Dynamik des Werkzeugs.

In einer Ausführungsform sind das Unterteil und das Oberteil so eingerichtet, dass das Werkzeug mit der Welle verriegelt verbunden wird, indem das Oberteil mit dem Unterteil verriegelt verbunden wird. Entsprechend sind das Unterteil und das Oberteil so eingerichtet, dass das verriegelt verbundene Werkzeug von der Welle gelöst werden kann, indem das Oberteil von dem Unterteil oder das Oberteilgehäuse vom Unterteilgehäuse gelöst wird. Vergleichsweise große Betätigungsgriffe für den Benutzer können somit für ein besonders komfortables Verriegeln und Lösen, d.h. Entriegeln, bereitgestellt werden. Axiale Verriegelungsmittel an dem Werkzeug oder der Welle und damit möglicherweise störende Fliehkräfte und Unwucht können so vermieden werden. Besonders hohe Drehzahlen können so besonders zuverlässig ermöglicht werden.

In einer Ausführungsform kann das Unterteil so in die Gefäßdurchführung eingesetzt und/oder mit dem Speisenzubereitungsgefäß verbunden werden, dass die Gefäßdurchführung durch das Unterteil abgedichtet wird. Abdichten meint wasserdicht. Das Werkzeug kann so von der Welle bzw. dem Unterteil gelöst und entfernt werden, ohne dass hierdurch das Speisenzubereitungsgefäß aufgrund der Gefäßdurchführung undicht für Flüssigkeit wird. Ein besonders hoher Bedienkomfort kann daher erzielt werden. In einer Ausgestaltung ist ein Dichtelement zum Erzeugen einer abgedichteten Verbindung zwischen dem Unterteil und dem Speisenzubereitungsgefäß im Randbereich der Gefäßdurchführung vorgesehen. Das Dichtelement ist bevorzugt zwischen dem Unterteilgehäuse und dem Gefäßboden und/oder einer die Gefäßdurchführung begrenzenden Innenkontur des Gefäßbodens angeordnet.

In einer Ausgestaltung ist das Dichtelement ein statisches Dichtelement, das nicht zum Wechseln, Demontieren, Montieren, Entnehmen oder Einsetzen durch den Benutzer bestimmt oder eingerichtet ist. Vielmehr ist ein statisches Dichtelement für einen permanenten Einsatz im montierten Zustand bestimmt. Eine besonders hohe Dichtheit und lange Lebensdauer können so erzielt werden. Grundsätzlich kann das Speisenzubereitungsgefäß das Dichtelement umfassen. Bevorzugt umfasst jedoch das Unterteil das Dichtelement. In einer Ausgestaltung enthält das Dichtelement ein elastisches Material, bevorzugt ein gummielastisches Material, besonders bevorzugt ein Elastomer, oder besteht daraus. Insbesondere umfasst das Dichtelement Silikon. Vorzugsweise ist das Dichtelement ringartig. Alternativ ist es grundsätzlich möglich, ein Dichtelement einzusetzen, dass für ein Wechseln durch den Benutzer bestimmt und eingerichtet ist.

In einer Ausgestaltung sind das Speisenzubereitungsgefäß und das Unterteil so eingerichtet, dass das Unterteil permanent in der Gefäßdurchführung eingesetzt ist. Ein Demontieren des Unterteils von dem Speisenzubereitungsgefäß durch den Benutzer beispielsweise für ein Reinigen ist in dieser Ausgestaltung nicht vorgesehen und grundsätzlich ohne Werkzeug nicht möglich. Ein Austreten einer Speise oder Flüssigkeit durch die Gefäßdurchführung aus dem Speisenzubereitungsgefäß kann so dauerhaft vermieden werden. Gleichzeitig kann zur Entnahme einer Speise oder zur Reinigung das Werkzeug gelöst und entfernt werden. Auch in dieser Ausgestaltung kann eine Werkzeuganordnung mit dem Oberteil und Unterteil eine von dem Speisenzubereitungsgefäß separate Einheit sein, die beispielsweise als Ersatzteil durch einen Fachbetrieb im Speisenzubereitungsgefäß gewechselt werden kann.

In einer Ausführungsform kann das Unterteil so in die Gefäßdurchführung eingesetzt und/oder mit dem Speisenzubereitungsgefäß verbunden werden, dass das Unterteilgehäuse axial fixiert und/oder drehfest mit dem Speisenzubereitungsgefäß verbunden werden kann. Ein vibrationsarmer Betrieb des Werkzeugs auch bei hohen Drehzahlen wird so ermöglicht.

In einer Ausgestaltung weist das Unterteilgehäuse mindestens einen radialen Vorsprung auf, der im in der Gefäßdurchführung eingesetzten Zustand in eine radiale Ausnehmung der Innenkontur greift, welche die Gefäßdurchführung begrenzt. Eine drehfeste Fixierung wird so konstruktiv besonders einfach und zuverlässig ermöglicht. Die Innenkontur ist Teil des Speisenzubereitungsgefäßes, insbesondere des Gefäßbodens. Der radiale Vorsprung ist Teil einer umfänglichen Außenkontur des Unterteilgehäuses, die im eingesetzten Zustand auf der Höhe der Innenkontur liegt. Insbesondere haben die Außenkontur und/oder die Innenkontur eine insbesondere zueinander korrespondierende nicht-symmetrische Querschnittsform, bevorzugt eine sternartige Querschnittsform. Insbesondere sind mehrere radiale Vorsprünge der Außenkontur und/oder mehrere radiale Ausnehmungen der Innenkontur umfänglich gleichmäßig verteilt.

In einer Ausgestaltung ist wenigstens bei einem radialen Vorsprung ein axial nach unten versetzter weiterer radialer Vorsprung vorgesehen. Der weitere radiale Vorsprung befindet sich insbesondere unterhalb des Gefäßbodens und/oder bildet gemeinsam mit dem Vorsprung eine ringartig umlaufende Nut am Umfang des Unterteilgehäuses. Die so gebildete Nut kann zum Verspannen des Unterteils bzw. des Unterteilgehäuses mit einer Unterseite des Speisenzubereitungsgefäßes genutzt werden, so dass das Unterteilgehäuse von unten gegen den Gefäßboden gedrückt wird. Ein besonders robuster Halt des Unterteils in der Gefäßdurchführung im eingesetzten Zustand bzw. eine besonders robuste Verbindung mit dem Speisenzubereitungsgefäß können so erhalten werden.

In einer Ausführungsform wird das Oberteilgehäuse zum verriegelten Verbinden des Werkzeugs mit der Welle axial fixiert und/oder drehfest mit dem Unterteilgehäuse verriegelt. Das Werkzeug kann so automatisch mit der Welle verriegelt verbunden werden, wenn das Oberteilgehäuse axial mit dem Unterteilgehäuse verriegelt wird. Ein benutzerfreundliches Verriegeln wird so ermöglicht, weil ein Handhaben des Oberteils verglichen mit dem Werkzeug selbst einfacher ist. Durch das drehfeste Verbinden kann ein Mitdrehen des Oberteilgehäuses mit dem Werkzeug beispielsweise aufgrund von Reibung im Kugellager vermieden werden.

In einer Ausführungsform sind eine Rastaufnahme und ein bewegbares Sperrelement zum Verrasten mit der Rastaufnahme für das axiale Verriegeln vorgesehen. Ein Verriegeln des Oberteils mit dem Unterteil bzw. des Oberteilgehäuses mit dem Unterteilgehäuse kann so konstruktiv besonders einfach und für den Benutzer anwenderfreundlich umgesetzt werden. Vorzugsweise erfolgt das Verriegeln durch ein Verspannen und/oder Verrasten. Insbesondere umfasst das Unterteilgehäuse die Rastaufnahme, und/oder das Oberteilgehäuse umfasst das Sperrelement. Alternativ ist grundsätzlich auch möglich, dass das Oberteilgehäuse die Rastaufnahme umfasst und/oder das Unterteilgehäuse das Sperrelement umfasst. Insbesondere ist eine Führung oder ein Anschlag vorgesehen, der das Sperrelement in dem axial verriegelten Zustand, also in der Rastposition, ein Verschieben in Umfangrichtung begrenzt. Wenn ein Drehmoment auf die axiale Rastverbindung wirkt, die größer als die Haftreibung ist, können durch die Führung oder den Anschlag ein Verschieben in Umfangrichtung verhindert und dadurch ein besonders zuverlässiger und robuster Betrieb sichergestellt werden.

In einer Ausgestaltung ist das Sperrelement ein Fallriegel, ein Sperrriegel, ein Sperrhebel, eine Spannklammer oder ein Widerhaken. Ein Verriegeln mit besonders wenigen manuellen Schritten wird so ermöglicht. Bevorzugt ist der Verriegelungsmechanismus ein Clipverschluss, eine Einhakverriegelung oder ein Schnappverschluss.

In einer Ausführungsform ist das Sperrelement durch eine Feder vorgespannt. Das Sperrelement ist also federvorgespannt. Eine besonders zuverlässige Sicherung des Sperrelements in der Rastposition relativ zur Rastaufnahme kann so erreicht werden. In einer alternativen oder ergänzenden Ausführungsform wird die Rastaufnahme durch eine Hinterschnittkontur gebildet. Eine besonders zuverlässige Rastverbindung kann so erzielt werden. Hinterschnittkontur ist auf die axiale Richtung bezogen. Das Sperrelement greift zum Verriegeln axial hinter die Hinterschnittkontur, so dass das Sperrelement mit der Rastaufnahme verrastet. Das Sperrelement wird im verrasteten Zustand an einer Rückbewegung zum Lösen der Rastverbindung gehindert.

In einer Ausführungsform ist zum Verrasten des Sperrelements mit der Rastaufnahme das Sperrelement manuell entgegen der Federvorspannung ausgelenkt und wird in eine Kupplungsposition relativ zur Rastaufnahme bewegt. Das Sperrelement kann die Kupplungsposition nur erreichen, also z.B. die Hinterschnittkontur passieren, wenn das Sperrelement manuell entgegen der Federvorspannung ausgelenkt ist. Alternativ oder ergänzend wird das Sperrelement durch die Federvorspannung von der Kupplungsposition in eine Rastposition bewegt. In der Rastposition verrastet das Sperrelement mit der Rastaufnahme, d.h., das Sperrelement rastet hinter der Hinterschnittkontur ein. Durch Freigeben des federvorgespannten und ausgelenkten Sperrelements erfolgt somit das Verrasten mit der Rastaufnahme, z.B. durch ein Einrasten in die Hinterschnittkontur. In einer Ausgestaltung ist das Sperrelement an einem Ende oder mittig rotierbar gelagert und/oder das Sperrelement schwenkt von einer Ausgangsstellung in die Kupplungsposition, insbesondere radial, vorzugsweise radial in Richtung der Drehachse der Welle. In einer alternativen oder ergänzenden Ausgestaltung ist das Sperrelement linear beweglich geführt, insbesondere radial und/oder senkrecht zur Drehachse der Welle. Vorzugsweise hat ein linear beweglich geführtes Sperrelement ein in Bewegungsrichtung schwalbenschwanzartiges, trapezförmiges und/oder keilförmiges Profil. In einer Ausgestaltung wird die Ausgangsstellung durch eine Anschlagkontur definiert, gegen die das Sperrelement durch die Federvorspannung bewegt und gedrückt wird, wenn das Sperrelement gelöst und nicht von dem Benutzer betätigt wird. In einer Ausgestaltung ist die Feder eine Druckfeder oder Torsionsfeder, bevorzugt eine Spiralfeder. In einer alternativen oder ergänzenden Ausgestaltung ist das Sperrelement so beschaffen, dass das Sperrelement federartig, elastisch verbogen oder gekrümmt werden kann und/oder bei manueller Auslenkung durch ein elastisches Verbiegen oder Krümmen das Sperrelement selbst die Federvorspannung erzeugt. Eine zusätzliche Feder kann so eingespart werden. Insbesondere weist das Sperrelement einen Griff für den Benutzer auf.

In einer Ausführungsform ist das Werkzeug drehfest mit einem Ankopplungszapfen verbunden, wobei der Ankopplungszapfen formschlüssig drehfest mit der Welle verbunden werden kann, bevorzugt unmittelbar, um das Werkzeug mit der Welle verriegelt zu verbinden. Speisereste können so besonders leicht entfernt werden, ohne dass dabei eine aus dem Gefäßboden ragende Welle stört. Das Oberteil umfasst den Ankopplungszapfen. Der Ankopplungszapfen kann einstückig mit der Halterung für die Werkzeugarme ausgeführt oder damit axial fixiert und drehfest verbunden sein, bevorzugt unlösbar für den Benutzer. Alternativ kann die Welle unmittelbar mit dem Werkzeug oder der Halterung für die Werkzeugarme formschlüssig drehfest verbunden werden, dann jedoch für den Benutzer lösbar durch ein Entriegeln des Oberteils vom Unterteil. In einer Ausgestaltung ist der Ankopplungszapfen durch ein Kugellager drehbar im Oberteilgehäuse gelagert.

In einer Ausführungsform ist das Werkzeug im verriegelt verbundenen Zustand mit der Welle formschlüssig drehfest mit der Welle verbunden. Ein besonders einfaches Ankoppeln für ein Verriegeln beispielsweise durch bloßes Aufstecken und Verriegeln des Oberteils auf das Unterteil kann so ermöglicht werden.

In einer Ausgestaltung ist ein formschlüssig drehfestes Verbinden durch ein mehrkantiges Profil, bevorzugt ein Vierkant oder ein sternförmiges Profil, sowie einer entsprechenden Gegenkontur realisiert.

Ein weiterer Aspekt der Erfindung betrifft eine Werkzeuganordnung oder ein Speisenzubereitungsgefäß mit einer Werkzeuganordnung für die oben beschriebene Speisenzubereitungsvorrichtung, wobei die Werkzeuganordnung im Wesentlichen aus einem Oberteil und einem Unterteil besteht. Das Oberteil weist ein drehbares Werkzeug zum Zerkleinern und/oder Mischen einer Speise in einem Speisenzubereitungsgefäß auf. Das Unterteil umfasst eine Welle zum Drehen des Werkzeugs, die zumindest teilweise außerhalb des Speisenzubereitungsgefäßes liegen kann, um mit einem Antrieb zum Drehen gekoppelt zu werden. Das Werkzeug kann zum Drehen lösbar mit der Welle verbunden werden. Ein Verriegelungsmechanismus für ein verriegeltes Verbinden des Werkzeugs mit der Welle ist vorgesehen und so beschaffen, dass das Werkzeug durch die Welle im Betrieb in beide Drehrichtungen zum Zerkleinern und/oder Mischen einer Speise angetrieben werden kann. Die oben beschriebenen Ausführungsformen beziehen sich auch auf das Speisenzubereitungsgefäß bzw. die Werkzeuganordnung des in diesem Absatz beschriebenen Aspekts der Erfindung.

Nachfolgend werden Ausführungsbeispiele der Erfindung auch anhand von Figuren näher erläutert. Merkmale der Ausführungsbeispiele und weiterer nachfolgend beschriebener alternativer oder ergänzender Ausgestaltungen können einzeln oder in einer Mehrzahl mit den beanspruchten Gegenständen kombiniert werden. Die beanspruchten Schutzbereiche sind nicht auf die Ausführungsbeispiele beschränkt.

Es zeigen:
- Figur 1:: Schematische Darstellung eines ersten Ausführungsbeispiels im Längsschnitt mit einem Werkzeug, das im Betrieb in beide Drehrichtungen angetrieben werden kann und mit der Welle verriegelt verbunden ist;
- Figur 2:: Schematische Darstellung eines zweiten Ausführungsbeispiels im Längsschnitt;
- Figur 3:: Schematische Darstellung eines dritten Ausführungsbeispiels im Längsschnitt.

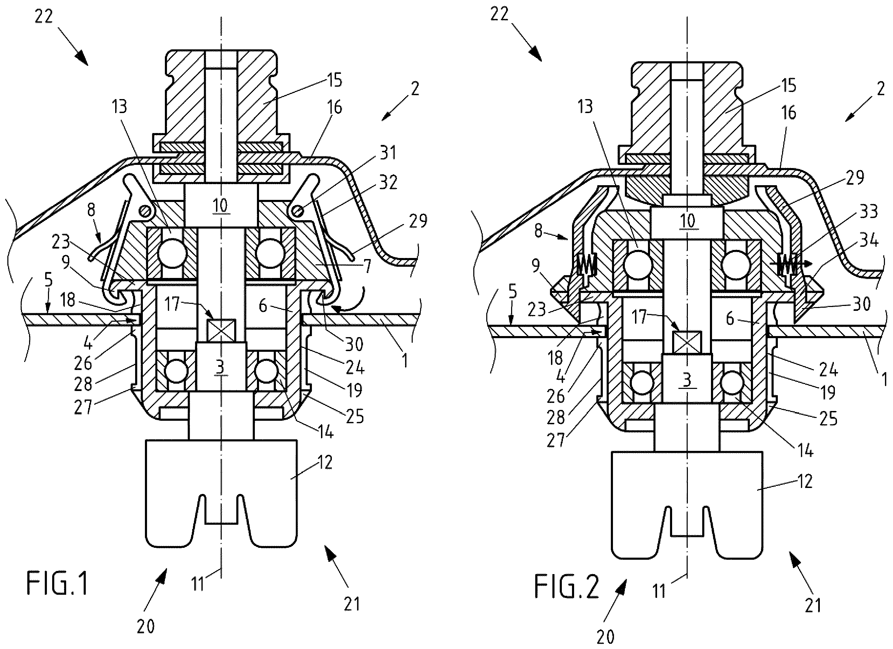

Die Figuren 1, 2 und 3 zeigen unterschiedliche Ausführungsbeispiele mit einem drehbaren Werkzeug 2 zum Zerkleinern und/oder Mischen einer nicht dargestellten Speise oberhalb eines Gefäßbodens 5 in einem nicht weiter dargestellten Speisenzubereitungsgefäßes 1, das sich normalerweise zylinderartig vom Seitenrand des Gefäßbodens bis zu einer Oberseite erstreckt, die optional durch einen Deckel abdeckbar ist und zum Zuführen und Entnehmen einer Speise dient. Das Werkzeug 2 gehört zu einer ersten Baugruppe, nachfolgend Oberteil 22 genannt. Das Werkzeug 2 ist in den Figuren im verriegelt verbundenen Zustand mit der Welle 3 dargestellt. Die Welle 2 liegt außerhalb oder jedenfalls mit einem Abschnitt außerhalb des Speisenzubereitungsgefäßes 1. Die Welle 3 gehört zu einer zweiten Baugruppe, die nachfolgend Unterteil 21 genannt wird. Das Oberteil 22 und das Unterteil 21 bilden zusammen eine Werkzeuganordnung 20. Die Werkzeuganordnung 20 kann wie dargestellt mit dem Speisenzubereitungsgefäß 1 verbunden werden, insbesondere durch Einsetzen des Unterteils 21 in die Gefäßdurchführung 4, die sich koaxial zur Drehachse 11 des Werkzeugs 2 und der Welle 3 erstreckt, die senkrecht zum Gefäßboden 5 orientiert ist. Die Welle 3 hat ein nicht-rotationssymmetrisch, insbesondere sternförmig, geformtes Ankopplungsende 12, um lösbar mit einem nicht dargestellten Antrieb zum Drehen gekoppelt zu werden. Das Ankoppeln des Ankopplungsendes 12 mit dem Antrieb kann insbesondere durch das Einsetzten des Speisenzubereitungsgefäßes 1 in eine nicht dargestellte Aufnahme der Speisenzubereitungsvorrichtung mit dem Antrieb erfolgen. Ein Entnehmen des Speisenzubereitungsgefäßes 1 aus der Aufnahme führt dann automatisch zum Lösen des Ankopplungsendes 12 vom Antrieb. Das Oberteil 22 hat ein Oberteilgehäuse 7 mit einem Kugellager 13 zum drehbaren Lagern eines Ankopplungszapfens 10 des Oberteils 22. Der Ankopplungszapfen 10 ist im oberen Bereich axial fixiert und drehfest mit einer Halterung 15 für radiale Werkzeugarme 16 bevorzugt nicht zerstörungsfrei lösbar verbunden, z.B. durch eine nicht dargestellte Niet- und Schraubverbindung oder stoffschlüssig. Die Werkzeugarme 16 haben bevorzugt eine Klinge. Am unteren Ende weist der Ankopplungszapfen 10 insbesondere eine nicht-rotationssymmetrische Vertiefung für eine formschlüssige drehfeste Verbindung 17 mit einer entsprechend nicht-rotationssymmetrischen, hervorstehenden Gegenkontur des oberen Endes der Welle 3 auf. Die Welle 3 ist über ein anderes Kugellager 14 mit dem Unterteilgehäuse 6 des Unterteils 21 drehbar gelagert.

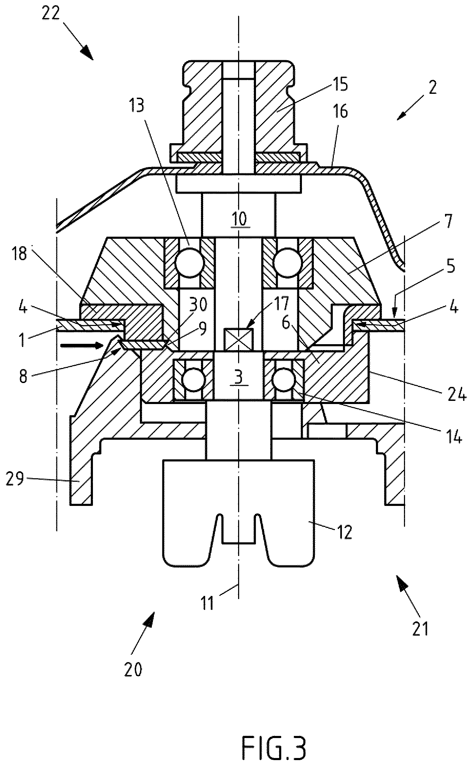

Bei den Ausführungsbeispielen der Figuren 1 und 2 wird ein Einsetzen und wasserdichtes Abdichten der Gefäßdurchführung 4 durch das Unterteil 21 wie folgt realisiert. Das Dichtelement 18 wird von unten auf die äußere Mantelfläche 24 des Unterteilgehäuse 6 bis zu einem Radialabsatz 23, nachfolgend oberer Radialabsatz 23 genannt, als oberen Anschlag für das Dichtelement 18 geschoben. Das Unterteil 21 wird von oben in die Gefäßdurchführung 4 einsetzt. Insbesondere wird ein weiteres Dichtelement 19 von unten auf die äußere Mantelfläche 24 des Unterteilgehäuses 6 geschoben. Das weitere Dichtelement 19 kann dazu elastisch über einen insbesondere umlaufenden oder ringförmigen weiteren Radialabsatz 25, im Folgenden unterer Radialabsatz 25 genannt, unter elastischer Ausdehnung geschoben werden. Nach Passieren des unteren Radialabsatzes 25 zieht sich das weitere Dichtelement 19 wieder zusammen und wird formschlüssig durch den unteren Radialabsatz 25 axial abgestützt, so dass eine Klemmkraft zwischen den beiden Dichtelemente auf den Gefäßboden erzeugt werden kann. Der Gefäßboden 5 kann somit durch die beiden Dichtelemente 18, 19 wasserdicht abgedichtet werden. Alternativ oder ergänzend kann das weitere Dichtelement 19 bereits mit dem Unterteilgehäuse 6 vormontiert sein und beim Einsetzen des Unterteils in die Gefäßdurchführung 4 derart elastisch verformt werden, dass das weitere Dichtelement 19 beim Einsetzen von oben durch die Gefäßdurchführung 4 gedrängt wird und sich nach dem Passieren der Gefäßdurchführung 4 wieder elastisch in die ursprüngliche Form ausdehnt, so dass der Gefäßboden 5 zwischen den beiden Dichtelementen 18, 19 eingeklemmt wird. Bei dem weiteren Dichtelement 19 dient ein Vorsprung 26 zum Einklemmen des Gefäßbodens 5 von der Unterseite. Der Vorsprung 26 überdeckt einen axial darunter beabstandet angeordneten weiteren Vorsprung 27, die gemeinsam eine Nut 28 in Umfangrichtung ausbilden. Die so gebildete Nut 28 kann zum Verspannen des Unterteils 21 bzw. des Unterteilgehäuses 6 mit der Unterseite des Gefäßbodens 5 genutzt werden, so dass das Unterteilgehäuse 6 von unten gegen den Gefäßboden gedrückt wird. Eine solche Nut 21 in Umfangrichtung ist insbesondere auch in dem Ausführungsbeispiel der Figur 3 implementiert, jedoch nicht in dem Längsschnitt sichtbar. Ein besonders robuster Halt des Unterteils 21 in der Gefäßdurchführung 4 im eingesetzten Zustand kann so erhalten werden.

Bei dem Ausführungsbeispiel der Fig. 3 kann das Dichtelement 18 von oben in die Gefäßdurchführung 4 gesteckt werden, insbesondere derart, dass im montierten Zustand dauerhaft eine Druckkraft radial von innen gegen die Innenkontur der Gefäßdurchführung 4 ausgeübt wird. Im verriegelt verbundenen Zustand wird das Dichtelement 18 zwischen dem Oberteil 22 bzw. dem Oberteilgehäuse 7 und dem Gefäßboden 5 sowie dem Unterteil 21 bzw. dem Unterteilgehäuse 6 axial eingeklemmt. Die Abdichtwirkung wird so weiter erhöht.

In den Ausführungsbeispielen der Figuren 1, 2 und 3 bildet die bevorzugt sternartig geformte äußere Mantelfläche 24 des Unterteilgehäuses 6 mit dem umfänglich angrenzenden Dichtelement 18 eine geschlossene, dichte sowie formschlüssig drehfeste Verbindung des Unterteils 21 bzw. des Unterteilgehäuses 6 mit dem Gefäßboden 5. Die Innenkontur der Gefäßdurchführung 4 weist dazu eine entsprechende Gegenkontur auf.

Bei dem Ausführungsbeispiel der Figur 1 ist ein bewegbares Sperrelement 8, bevorzugt zwei spiegelsymmetrische Sperrelemente 8, in Form eines am bevorzugt trapezförmigen Oberteilgehäuse 7 radial schwenkbar gelagerten Sperrhebels vorgesehen. Bevorzugt ist das Schwenklager 31 des Sperrelements 8 an dem oberen Ende. An dem unteren Ende des Sperrelements 8 befindet sich eine Rastkontur 30 zum Einrasten in eine Hinterschnittkontur einer Rastaufnahme 9, um das Sperrelement 8 mit der Rastaufnahme 9 zu verrasten, also zu verriegeln. Insbesondere ist das Sperrelement 8 für ein radiales nach außen Schwenken durch eine nicht dargestellte Feder vorgespannt. Insbesondere liegt die Rastaufnahme 9 am äußeren Rand des Radialabsatzes 23. Nachdem der Benutzer das Oberteil 22 auf das Unterteil 21 aufgesetzt hat, kann der Benutzer über einen Griff 29 das Sperrelement 8 nach unten verschwenken, bis das Sperrelement 8 gegen die Rastaufnahme 9 stößt. Um die Rastaufnahme 9 in Form einer Hinterschnittkontur axial und radial nach innen zu überwinden, drückt der Benutzer den insbesondere mittig am Sperrelement 8 radial abstehenden Griff 29 und kann so ein elastisches Auslenken des Sperrelements 8 in Form eines elastischen Verformens oder Krümmens bewirken. Durch das Krümmen verlängert sich der Abstand von der Rastkontur 30 zum Schwenklager 31. Sobald das Sperrelement 8 hinreichend gekrümmt ist, um die Hinterschnittkontur zu überwinden, bewegt sich das Sperrelement von der Kupplungsposition hinter die Hinterschnittkontur. Das Sperrelement 8 verformt sich elastisch zurück in seine ursprüngliche Form. Die insbesondere hakenförmige Rastkontur 30 rastet so hinter dem Hinterschnitt ein (in Fig. 1 durch einen Pfeil angedeutet) und gelangt so in die Rastposition. Das Sperrelement 8 ist dann axial mit der Rastaufnahme 9 verriegelt. Eine Führung 32 vermeidet ein umfängliches Verschieben. Zum Lösen bzw. Entriegeln zieht der Benutzer den Griff 29 radial nach außen und verformt so erneut das Sperrelement 8 elastisch, bis sich die Rastkontur 30 vom Hinterschnitt löst und das Sperrelement 8 von der Rastaufnahme 9 entriegelt wird. Das Oberteil 22 mit dem Werkzeug 2 kann dann vom Unterteil 21 abgehoben werden.

Bei dem Ausführungsbeispiel der Figur 2 ist ein bewegbares Sperrelement 8, bevorzugt zwei spiegelsymmetrische Sperrelemente 8, in Form eines Fallriegels vorgesehen, der in Pfeilrichtung durch eine Feder 33, insbesondere eine Spiralfeder, radial nach außen vorgespannt ist. Beim Aufsetzen des Oberteils 22 auf das Unterteil 21 hält der Benutzer gleichzeitig die zwei gegenüberliegende Sperrelemente 8 radial nach innen in Richtung der Drehachse 11 gedrückt. Die Sperrelemente 8 können dadurch entsprechende Öffnungen 34 im Unterteilgehäuse 6 passieren. Die Öffnungen 34 sind insbesondere in einem Endbereich des Radialabsatzes 23 angeordnet und/oder werden durch eine Hinterschnittkontur der Rastaufnahme 9 gebildet. Wenn die Rastkontur 30 die Hinterschnittkontur passiert hat und der Ankopplungszapfen 10 mit der Welle 3 verbunden ist, lässt der Benutzer die Sperrelemente 8 los, so dass die Sperrelemente 8 sich von der Kupplungsposition hinter der Öffnung bzw. dem Hinterschnitt in die Rastposition bewegen und somit einrasten. Zum Lösen und Entfernen des Werkzeugs 2 von der Welle 3 werden die Sperrelemente 8 vom Benutzer wieder radial entgegen der Federvorspannung in die Kupplungsposition gebracht und nach oben bewegt. Das Oberteil 22 kann so vom Unterteil 21 entnommen werden.

Bei dem Ausführungsbeispiel der Figur 3 hat das Sperrelement 8 insbesondere ein trapezförmiges oder keilförmiges Profil. Insbesondere ist nur ein Sperrelement 8 vorgesehen. Das Sperrelement 8 ist bevorzugt zum Profil seitlich geführt bewegbar oder der Griff 29 kann seitlich in Eingriff mit dem Sperrelement 8 gebracht werden. Insbesondere können das Sperrelement 8 und/oder der Griff 29 radial (in Pfeilrichtung) manuell bewegt und/oder federvorgespannt werden. In einer Ausgestaltung kann das Sperrelement 8 durch den Griff 29 zwischen einer Kupplungsposition und einer Rastposition hin und herbewegt werden. In einer alternativen Ausgestaltung ist das Sperrelement 8 unbeweglich mit dem Oberteilgehäuse 7 verbunden, und der Griff 29 kann zwischen einer Kupplungsposition und einer Rastposition hin- und herbewegt werden. Die Rastkontur 30 und die Rastaufnahme 9 sind in dieser alternativen Ausführungsform abweichend von Figur 3 am Griff 29 bzw. am Hinterschnitt des Sperrelements 8 angeordnet. In beiden Ausgestaltungen wirkt die Federvorspannung von der Kupplungsposition in Richtung der Rastposition, die in Figur 3 gezeigt ist. In der Kupplungsposition kann das Oberteil 22 auf das Unterteil 21 gesteckt oder entnommen werden. In der Rastposition kann das Oberteilgehäuse 7 mit dem Unterteilgehäuse 6 durch ein Verrasten der Rastaufnahme 9 in Form eines axialen Hinterschnitts mit der Rastkontur 30 verriegelt werden. Zum Entriegeln und/oder Verriegeln kann der Griff 29 durch ein Drehen, Ziehen und/oder Drücken betätigt werden, um zwischen der Kupplungsposition und der Rastposition zu wechseln. Die Rastkontur 30 kann so durch den Griff 29 von der Rastaufnahme 9 gelöst werden, so dass das Oberteil 22 vom Unterteil 21 entfernt werden kann. Insbesondere ist der Griff 29 unterhalb des Gefäßbodens 5 durch den Benutzer betätigbar. Vorzugsweise ist der Griff 29 dem Unterteil 21 zuzuordnen.

Figurenübergreifend wird im Folgenden der Verriegelungsmechanismus allgemein näher beschrieben. Das Werkzeug 2 kann wie oben erläutert in beide Drehrichtungen angetrieben werden, wobei jedoch keine Undichtigkeit im Speisenzubereitungsgefäß 1 entsteht, wenn das Werkzeug 2 gelöst und entfernt wird. In einer vorteilhaften Ausgestaltung ist eine Ankopplungsstelle der Welle 3 des Unterteils 21 mit dem Ankopplungszapfen 10 oder der Halterung 15 des Oberteil 22, insbesondere die formschlüssige drehfeste Verbindung 17, innerhalb eines Bereich angeordnet, der unmittelbar einer zuzubereiten Speise ausgesetzt ist, also mit der Speise in Kontakt kommt. Durch diese Trennung können die dichtenden Komponenten wie z.B. das Dichtelement 18, das Unterteilgehäuse 6 und die Welle 3, im Gefäßboden 5 verbleiben, während die Komponenten, welche die Entnahme der Speisen erschweren, wie z.B. das Werkzeug 2, entnommen werden können. Im Gefäßboden 5, speziell in der Gefäßdurchführung 4, ist die Welle 3 drehbar mittels des Unterteilgehäuses 6 gelagert integriert und wird mit dem Ankopplungsende 12 beim Einsetzten des Speisenzubereitungsgefäßes 1 mit einer Antriebswelle des Antriebs, der einen Elektromotor umfasst, gekuppelt. Das Werkzeug 2, z.B. in Form von verbundenen Messern mit Klingen, die an einer Halterung 15 und/oder dem Ankopplungszapfen 10 fest verbunden sind, wird insbesondere über den Ankopplungszapfen 10 mit den genannten drehbaren Komponenten des Oberteils 22 drehbar im Oberteilgehäuse 7 gelagert. Das Oberteil 22 wird über das Oberteilgehäuse 7 radial und axial im Gefäßboden 5 gesichert. Dadurch werden die Messer im Gefäßboden 5 gehalten und gleichzeitig mit der antreibbaren Welle 3 im Gefäßboden 5 in Eingriff gebracht. Das Oberteilgehäuse 7 dreht sich nicht mit, der Ankopplungszapfen 10 mit den damit verbundenen Klingen jedoch schon. Die Fixierung des Oberteilgehäuses 7 am Gefäßboden 5 kann dabei auf verschiedene Art erfolgen, wie exemplarisch in den Figuren gezeigt. Die radiale Sicherung des Oberteilgehäuses 7 kann vorteilhaft durch einen Formschluss in der Innenkontur des Gefäßbodens 5 erfolgen. Die axiale Sicherung kann über einen lösbaren Formschluss zwischen beweglichen Sperrelementen 8, Oberteilgehäuse 7 und Hinterschnittkonturen im Gefäßbodens 5 und/oder im Unterteilgehäuse 6 erfolgen. Die Sperrelemente 8 können durch manuelle Handkraft des Benutzers in eine Kupplungsposition gedrückt und das Oberteil 22 in den Gefäßbodens 5 mit der Gefäßdurchführung 4 und/oder dem Unterteil 21 eingesetzt werden, um ein radiales Sichern zu ermöglichen. Die Sperrelemente 8 können in der Kupplungsposition an den Hinterschnittkonturen vorbeigeführt werden. Durch Lösen der Handkraft können die Sperrelemente 8 durch Federkraft in die Rastposition geschoben und in Eingriff mit den Hinterschnittkonturen gebracht werden. Dadurch kann die axiale Position der Messer gesichert und somit auch der radiale Formschluss gewahrt werden. Die Zapfenankopplung 10 ist insbesondere über ein Kugellager 13 im Oberteilgehäuse 7 radial gelagert und axial fixiert. Dadurch wird die Position der Zapfenankopplung 10 durch die Fixierung des Oberteils 22 vollständig definiert. Die Übertragung der Drehbewegung von der Welle 3 auf die Zapfenankopplung 10 kann durch einen Formschluss der beiden verriegelt verbundenen Enden gewährleistet werden.

## Patentansprüche

1. Speisenzubereitungsvorrichtung mit einem Speisenzubereitungsgefäß (1) und einem drehbaren Werkzeug (2) zum Zerkleinern und/oder Mischen einer Speise in dem Speisenzubereitungsgefäß (1), wobei das Werkzeug (2) zum Drehen lösbar mit einer Welle (3) verbunden werden kann, die zumindest teilweise außerhalb des Speisenzubereitungsgefäßes (1) liegt, um mit einem Antrieb zum Drehen gekoppelt zu werden, wobei ein Verriegelungsmechanismus für ein verriegeltes Verbinden des Werkzeugs (2) mit der Welle (3) vorgesehen ist, wobei der Verriegelungsmechanismus so beschaffen ist, dass das Werkzeug (2) durch die Welle (3) im Betrieb in beide Drehrichtungen zum Zerkleinern und/oder Mischen einer Speise angetrieben werden kann, indem das Werkzeug (2) im verriegelt verbundenen Zustand mit der Welle (3) formschlüssig drehfest mit der Welle (3) verbunden ist, **dadurch gekennzeichnet, dass** das Speisenzubereitungsgefäß (1) eine Gefäßdurchführung (4) in einem Gefäßboden (5) des Speisenzubereitungsgefäßes (1) zum Verbinden des Werkzeugs (2) mit einem Antrieb umfasst und die Welle (3) zum Abdichten der Gefäßdurchführung (4) mit dem Speisenzubereitungsgefäß (1) verbunden bleiben kann, wenn das Werkzeug (2) von der Welle (3) gelöst und entfernt ist, wobei das Werkzeug (2) einen oder mehrere fest an einer Halterung (15) des Werkzeugs (2) angebrachte radiale Werkzeugarme (16) aufweist.

2. Speisenzubereitungsvorrichtung nach einem der vorhergehenden Ansprüche, **dadurch gekennzeichnet, dass** ein Unterteil (21) die Welle (3) umfasst und/oder die Welle (3) drehbar mit einem Unterteilgehäuse (6) des Unterteils (21) verbunden ist, insbesondere axial fixiert.

3. Speisenzubereitungsvorrichtung nach einem der vorhergehenden Ansprüche, **dadurch gekennzeichnet, dass** ein Oberteil (22) das Werkzeug (2) umfasst und/oder das Werkzeug (2) drehbar mit einem Oberteilgehäuse (7) des Oberteils (22) verbunden ist, insbesondere axial fixiert.

4. Speisenzubereitungsvorrichtung nach den zwei vorhergehenden Ansprüchen, **dadurch gekennzeichnet, dass** das Unterteil (21) und das Oberteil (22) so eingerichtet sind, dass das Werkzeug (2) mit der Welle (3) verriegelt verbunden wird, indem das Oberteil (22) mit dem Unterteil (21) verriegelt verbunden wird.

5. Speisenzubereitungsvorrichtung nach einem der drei vorhergehenden Ansprüche sowie Anspruch 2 oder 3, **dadurch gekennzeichnet, dass** das Unterteil (21) so in die Gefäßdurchführung (4) eingesetzt und/oder mit dem Speisenzubereitungsgefäß (1) verbunden werden kann, dass die Gefäßdurchführung (4) durch das Unterteil (21) abgedichtet wird.

6. Speisenzubereitungsvorrichtung nach einem der vier vorhergehenden Ansprüche sowie Anspruch 2 oder 3, **dadurch gekennzeichnet, dass** das Unterteil (21) so in die Gefäßdurchführung (4) eingesetzt und/oder mit dem Speisenzubereitungsgefäß (1) verbunden werden kann, dass das Unterteilgehäuse (7) axial fixiert und/oder fixiert mit dem Speisenzubereitungsgefäß (1) verbunden werden kann.

7. Speisenzubereitungsvorrichtung nach einem der vorhergehenden Ansprüche sowie Ansprüche 6 und 7, **dadurch gekennzeichnet, dass** das Oberteilgehäuse (6) zum verriegelten Verbinden des Werkzeugs (2) mit der Welle (3) axial fixiert und/oder drehfest mit dem Unterteilgehäuse (7) verriegelt wird.

8. Speisenzubereitungsvorrichtung nach dem vorhergehenden Anspruch, **dadurch gekennzeichnet, dass** eine Rastaufnahme (9) und ein bewegbares Sperrelement (8) zum Verrasten mit der Rastaufnahme (9) für das axiale Verriegeln vorgesehen sind.

9. Speisenzubereitungsvorrichtung nach dem vorhergehenden Anspruch, **dadurch gekennzeichnet, dass** das Sperrelement (8) durch eine Feder (33) vorgespannt ist und/oder die Rastaufnahme (9) durch eine Hinterschnittkontur gebildet wird.

10. Speisenzubereitungsvorrichtung nach dem vorhergehenden Anspruch, **dadurch gekennzeichnet, dass** zum Verrasten des Sperrelements (8) mit der Rastaufnahme (9) das Sperrelement (8) manuell entgegen der Federvorspannung ausgelenkt ist und in eine Kupplungsposition relativ zur Rastaufnahme (9) bewegt wird und/oder das Sperrelement (8) durch die Federvorspannung von der Kupplungsposition in eine Rastposition bewegt wird.

11. Speisenzubereitungsvorrichtung nach einem der vorhergehenden Ansprüche, **dadurch gekennzeichnet, dass** das Werkzeug (2) drehfest mit einem Ankopplungszapfen (10) verbunden ist, wobei der Ankopplungszapfen (10) formschlüssig drehfest mit der Welle (3) verbunden werden kann, um das Werkzeug (2) mit der Welle (3) verriegelt zu verbinden.

12. Werkzeuganordnung (20) für eine Speisenzubereitungsvorrichtung nach einem der vorhergehenden Ansprüche, wobei die Werkzeuganordnung (20) im Wesentlichen aus einem Oberteil (22) und einem Unterteil (21) besteht, wobei das Oberteil (22) ein drehbares Werkzeug (2) zum Zerkleinern und/oder Mischen einer Speise in einem Speisenzubereitungsgefäß (1) umfasst, wobei das Unterteil (21) eine Welle (3) zum Drehen des Werkzeugs (2) umfasst, die zumindest teilweise außerhalb des Speisenzubereitungsgefäßes (1) liegen kann, um mit einem Antrieb zum Drehen gekoppelt zu werden, wobei das Werkzeug (2) zum Drehen lösbar mit der Welle (3) verbunden werden kann und ein Verriegelungsmechanismus für ein verriegeltes Verbinden des Werkzeugs (2) mit der Welle (3) vorgesehen ist, wobei der Verriegelungsmechanismus so beschaffen ist, dass das Werkzeug (2) durch die Welle (3) im Betrieb in beide Drehrichtungen zum Zerkleinern und/oder Mischen einer Speise angetrieben werden kann, indem das Werkzeug (2) im verriegelt verbundenen Zustand mit der Welle (3) formschlüssig drehfest mit der Welle (3) verbunden ist, **dadurch gekennzeichnet, dass** die Werkzeuganordnung (20) so eingerichtet ist, dass das Oberteil (22) mit dem Werkzeug (2) von dem Unterteil (21) mit der Welle (3) gelöst und entnommen werden kann, so dass das Oberteil (22) einen Gefäßboden nicht mehr für eine Entnahme einer zubereiteten Speise verdeckt und das Unterteil (21) für ein Abgedichtetbleiben einer Gefäßdurchführung an Ort und Stelle verbleiben kann, wobei das Werkzeug (2) einen oder mehrere fest an einer Halterung (15) des Werkzeugs (2) angebrachte radiale Werkzeugarme (16) aufweist.

## Claims

1. Food preparation device comprising a food preparation vessel (1) and a rotatable tool (2) for chopping and/or mixing a food in the food preparation vessel (1), wherein the tool (2) can be detachably connected for rotation to a shaft (3) which is located at least partly outside the food preparation vessel (1), to be coupled to a drive for rotation, wherein a locking mechanism is provided for interlockingly connecting the tool (2) to the shaft (3), the locking mechanism being such that during operation the tool (2) can be driven by the shaft (3) in both directions of rotation for chopping and/or mixing a food, in that the tool (2) is connected in the interlockingly connected state with the shaft (3) in a form-fit rotationally fixed manner to the shaft (3), **characterized in that** the food preparation vessel (1) comprises a vessel passage (4) in a vessel bottom (5) of the food preparation vessel (1) for connecting the tool (2) to a drive, and the shaft (3) can remain connected to the food preparation vessel (1) for sealing the vessel passage (4), when the tool (2) is released from the shaft (3) and removed, wherein the tool (2) comprises one or more radial tool arms (16) fixedly attached to a support (15) of the tool (2).

2. Food preparation device according to one of the preceding claims, **characterized in that** a lower part (21) comprises the shaft (3) and/or the shaft (3) is rotatably connected, in particular axially fixed, to a lower part housing (6) of the lower part (21).

3. Food preparation device according to one of the preceding claims, **characterized in that** an upper part (22) comprises the tool (2) and/or the tool (2) is rotatably connected, in particular axially fixed, to an upper part housing (7) of the upper part (22).

4. Food preparation device according to the two preceding claims, **characterized in that** the lower part (21) and the upper part (22) are configured such that the tool (2) is interlockingly connected to the shaft (3) by interlockingly connecting the upper part (22) to the lower part (21).

5. Food preparation device according to one of the three preceding claims as well as claim 2 or 3, **characterized in that** the lower part (21) can be inserted into the vessel passage (4) and/or connected to the food preparation vessel (1) in such a way that the vessel passage (4) is sealed by the lower part (21).

6. Food preparation device according to one of the four preceding claims as welt as claim 2 or 3, **characterized in that** the lower part (21) can be inserted into the vessel passage (4) and/or connected to the food preparation vessel (1) in such a way that the lower part housing (7) can be axially fixed and/or fixedly connected to the food preparation vessel (1).

7. Food preparation device according to one of the preceding claims as well as claims 6 and 7, **characterized in that** the upper part housing (6) is axially fixed and/or rotationally locked to the lower part housing (7) for interlocking connection of the tool (2) to the shaft (3).

8. Food preparation device according to the preceding claim, **characterized in that** a locking seat (9) and a movable locking element (8) for interlocking with the locking seat (9) are provided for axial locking.

9. Food preparation device according to the preceding claim, **characterized in that** the locking element (8) is biased by a spring (33) and/or the locking seat (9) is formed by an undercut contour.

10. Food preparation device according to the preceding claim, **characterized in that** for locking the locking element (8) with the locking seat (9), the locking element (8) is manually deflected against the spring bias and is moved into a coupling position relative to the locking seat (9) and/or the locking element (8) is moved by the spring bias from the coupling position into a locking position.

11. Food preparation device according to one of the preceding claims, **characterized in that** the tool (2) is rotationally connected to a coupling pin (10), wherein the coupling pin (10) can be connected to the shaft (3) in a form-fit rotationally fixed manner in order to interlockingly connect the tool (2) to the shaft (3).

12. Tool assembly (20) for a food preparation device according to one of the preceding claims, wherein said tool assembly (20) consists essentially of an upper part (22) and a lower part (21), said upper part (22) comprising a rotatable tool (2) for chopping and/or mixing a food in a food preparation vessel (1), said lower part (21) comprising a shaft (3) for rotating said tool (2), which can be located at least partly outside the food preparation vessel (1) to be coupled to a drive for rotation, wherein the tool (2) can be detachably connected to the shaft (3) for rotation and a locking mechanism is provided for interlockingly connecting the tool (2) to the shaft (3), the locking mechanism being such that that during operation the tool (2) can be driven by the shaft (3) in both directions of rotation for chopping and/or mixing a food, in that the tool (2) is connected in the interlockingly connected state with the shaft (3) in a form-fit, rotationally fixed manner to the shaft (3), **characterized in that** the tool assembly (20) is configured such that the upper part (22) with the tool (2) can be released from the lower part (21) with the shaft (3) and removed, so that the upper part (22) no longer covers a vessel bottom for removal of a prepared food and the lower part (21) can remain in place for continued sealing of a vessel passage, wherein the tool (2) comprises one or more radial tool arms (16) fixedly attached to a support (15) of the tool (2).

## Revendications

1. Dispositif de préparation d'aliments comprenant un récipient de préparation d'aliments (1) et un outil rotatif (2) pour broyer et/ou mélanger un aliment dans le récipient de préparation d'aliments (1), l'outil (2) pouvant être relié de manière amovible à un arbre (3) pour tourner, lequel arbre se trouve au moins partiellement à l'extérieur du récipient de préparation d'aliments (1) pour être couplé à un entraînement de rotation, dans lequel un mécanisme de verrouillage est prévu pour une liaison verrouillée entre l'outil (2) et l'arbre (3), le mécanisme de verrouillage étant configuré de sorte que l'outil (2) peut être entraîné par l'arbre (3) pendant son fonctionnement dans les deux sens de rotation pour broyer et/ou mélanger un aliment, l'outil (2) étant relié par complémentarité de forme et de manière immobilisée en rotation à l'arbre (3) en état relié de manière verrouillée, **caractérisé en ce que** le récipient de préparation d'aliments (1) comprend un passage de récipient (4) dans un fond de récipient (5) du récipient de préparation d'aliments (1) pour relier l'outil (2) à un entraînement et l'arbre peut continuer à être relié au récipient de préparation d'aliments (1) pour rendre le passage de récipient (4) étanche, si l'outil (2) est détaché et enlevé de l'arbre (3), l'outil (2) comprenant un ou plusieurs bras d'outil (16) radiaux fermement fixés à un support (15) de l'outil (2).

2. Dispositif de préparation d'aliments selon l'une des revendications précédentes, **caractérisé en ce qu'**une partie inférieure (21) comprend l'arbre (3) et/ou l'arbre (3) est relié de manière rotative à un boîtier de partie inférieure (6) de la partie inférieure (21), notamment de manière axialement fixée.

3. Dispositif de préparation d'aliments selon l'une des revendications précédentes, **caractérisé en ce qu'**une partie supérieure (22) comprend l'outil (2) et/ou l'outil (2) est relié de manière rotative à un boîtier de partie supérieure (7) de la partie supérieure (22), notamment de manière axialement fixée.

4. Dispositif de préparation d'aliments selon l'une des deux revendications précédentes, **caractérisé en ce que** la partie inférieure (21) et la partie supérieure (22) sont configurées, de sorte que l'outil (2) est relié de manière verrouillée à l'arbre (3) en reliant de manière verrouillée la partie supérieure (22) à la partie inférieure (21).

5. Dispositif de préparation d'aliments selon l'une des trois revendications précédentes ainsi que selon la revendication 2 ou la revendication 3, **caractérisé en ce que** la partie inférieure (21) peut être insérée dans !e passage de récipient (4) et/ou reliée au récipient de préparation d'aliments (1), de sorte que le passage de récipient (4) est rendu étanche par la partie inférieure (21).

6. Dispositif de préparation d'aliments selon l'une des quatre revendications précédentes ainsi que selon la revendication 2 ou la revendication 3, **caractérisé en ce que** la partie inférieure (21) peut être insérée dans le passage de récipient (4) et/ou reliée au récipient de préparation d'aliments (1), de sorte que le boîtier de partie inférieure (7) peut être axialement fixé et/ou relié de manière fixée au récipient de préparation d'aliments (1).

7. Dispositif de préparation d'aliments selon l'une des revendications précédentes ainsi que selon la revendication 6 et la revendication 7, **caractérisé en ce que** le boîtier de partie supérieure (6) est axialement fixé et/ou verrouillé de manière immobilisée en rotation avec le boîtier de partie inférieure (7) pour relier de manière verrouillée l'outil (2) à l'arbre (3).

8. Dispositif de préparation d'aliments selon la revendication précédente, **caractérisé en ce qu'**un logement d'encliquetage (9) et un élément de blocage (8) mobile pour le verrouillage avec le logement d'encliquetage (9) sont prévus pour le verrouillage axial.

9. Dispositif de préparation d'aliments selon la revendication précédente, **caractérisé en ce que** l'élément de blocage (8) est précontraint par un ressort (33) et/ou le logement d'encliquetage (9) est formé par un contour de contre-dépouille.

10. Dispositif de préparation d'aliments selon la revendication précédente, **caractérisé en ce que** pour verrouiller l'élément de blocage (8) avec le logement d'encliquetage (9), l'élément de blocage (8) est déplacé manuellement contre la précontrainte du ressort et dans une position de couplage par rapport au logement d'encliquetage (9) et/ou l'élément de blocage (8) est déplacé par la précontrainte du ressort de la position de couplage dans une position d'encliquetage.

11. Dispositif de préparation d'aliments selon l'une des revendications précédentes, **caractérisé en ce que** l'outil (2) est relié de manière immobilisée en rotation à un tenon de couplage (10), le tenon de couplage (10) pouvant être relié par complémentarité de formes et de manière immobilisée en rotation à l'arbre (3) pour relier l'outil (2) de manière verrouillée à l'arbre (3).

12. Arrangement d'outil (20) pour un dispositif de préparation d'aliments selon l'une des revendications précédentes, l'arrangement d'outil (20) étant essentiellement composé d'une partie supérieure (22) et d'une partie inférieure (21), la partie supérieure (22) comprenant un outil rotatif (2) pour broyer et/ou mélanger un aliment dans un récipient de préparation d'aliments (1), la partie inférieure (21) comprenant un arbre (3) pour tourner l'outil (2), lequel arbre se trouve au moins partiellement à l'extérieur du récipient de préparation d'aliments (1) pour être couplé à un entraînement de rotation, l'outil (2) pouvant être relié de manière amovible à l'arbre (3) pour tourner, et dans lequel un mécanisme de verrouillage est prévu pour une liaison verrouillée entre l'outil (2) et l'arbre (3), le mécanisme de verrouillage étant configuré de sorte que l'outil (2) peut être entraîné par l'arbre (3) pendant son fonctionnement dans les deux sens de rotation pour broyer et/ou mélanger un aliment, l'outil (2) étant relié par complémentarité de forme et de manière immobilisée en rotation à l'arbre (3) en état relié de manière verrouillée, **caractérisé en ce que** l'arrangement d'outil (20) est configuré de sorte que la partie supérieure (22) peut être détachée avec l'outil (2) et enlevée de la partie inférieure (21) avec l'arbre (3), de sorte que la partie supérieure (22) ne couvre plus un fond de récipient pour sortir un aliment préparé et la partie inférieure (21) peut rester en place pour assurer l'étanchéité d'un passage de récipient, l'outil (2) comprenant un ou plusieurs bras d'outil (16) radiaux fermement fixés à un support (15) de l'outil (2).
